# EUROPEAN PATENT SPECIFICATION

(11) **EP 4 154 706 B1**
(45) Date of publication and mention of the grant of the patent: **20.11.2024**
(21) Application number: 22194712.0
(22) Date of filing: 08.09.2022
(51) Int. Cl.: A01K 1/02

(54) **PET BOX AND WINDOW STRUCTURE THEREOF**
HAUSTIERKISTE UND FENSTERSTRUKTUR DAFÜR
CAISSE DE TRANSPORT POUR ANIMAL DE COMPAGNIE ET STRUCTURE DE FENÊTRE ASSOCIÉE

(30) Priority: 08.07.2021 CN 202121554331 U
(43) Date of publication of application: 29.03.2023
(73) Proprietor: Ningbo Hongdu Model Plastics Co., Ltd., Ningbo, Zhejiang 315202 (CN)
(72) Inventor: PAN, Zhongjie, Ningbo, 315202 (CN); FANG, Li, Ningbo, 315202 (CN)
(74) Representative: Stolmár & Partner Patentanwälte PartG mbB

(56) References cited:
- WO-A1-2017/012914
- CN-A- 109 618 949
- CN-U- 207 870 002

## Description

### TECHNICAL FIELD

The present disclosure relates to a transportable container for pets, also known as a pet transporter or pet box. In particular, the present disclosure relates to a removable or replaceable window structure for the pet transporter.

### BACKGROUND

Pet boxes, containers and transporters are well known for their ability to contain, secure and transport one or more pets therein. Typical pet transporters and their structures are disclosed in CN205596830U and CN207948496U, where it is described that pet transporters typically comprise a box body and a door, wherein the door is fixed to the box body at an opening and when open, the door allows the box body to facilitate the entry and exit of pets through the opening. The box body of the pet transporter is generally comprised of moulded plastic, and usually on one or more of the sides adjacent to the opening facilitating the door, there is a window. This window may simply be an opening, one or more hollow slots periodically spaced, or a plastic or metal grille to facilitate airflow through the pet transporter and also allow for light to be transmitted into the box body.

CN 109 618 949 A discloses a pet box body door and window assembly and a pet box body. The pet box body door and window assembly comprises a strength supporting part at the inner side and a plastic door and window part of as a panel at the outer side, wherein the plastic door and window part comprises a plastic part and a hollowed-out slot arranged on the plastic part and used for light transmission and air circulation, and the strength supporting part is distributed on the inner side face of the plastic part of the plastic door and window part; the door and window assembly is composed of the strength supporting part at the inner side and the plastic door and window part at the outer side, and the strength supporting part plays a role of strength supporting at the inner side of the plastic door and window part.

WO 2017/012914 A1 discloses a cage for the transport of pets consisting of a pair of shell-shaped elements located one on another to form a container having a generally parallelepiped shape having a series of walls in which at least one opening is provided for access of the pet, closable by a door. At least one wall of one of the shell-shaped elements has an opening comprising a frame provided with rapid coupling and decoupling means for application and removal of a removable panel.

CN 207 810 002 discloses a labeling machine comprising a rotating roller, on which a label roll is wound, and the label on the label roll is located on a side away from the rotating roller, the labeling head is located on one side of the rotating direction of the rotating roller, and includes a label inlet and a label outlet. One end of the label inlet is against the label roll on the rotating roller, and the label outlet at the other end of the labeling head is located on the surface of the product to be labeled.

One feature common to typical pet transporters is that the window and its components are either permanently fixed to the box body, are cut into the moulded plastic of the box body, or otherwise require additional manufacturing processes to install onto the box body to provide for additional airflow or light through the pet transporter. Accordingly, typical pet transporters that have one or more windows require additional manufacturing effort in one or more of the welding, painting, cutting, processing and installing of said windows. Furthermore, as the one or more windows on typical pet transporters are permanently fixed or cut into the moulded plastic of the box body, the windows themselves when damaged (for example during transportation or by the pet) often result in requiring the entire pet transporter itself to be replaced.

It is against this background and the problems and difficulties associated therewith, that the present invention has been developed.

Throughout this disclosure, "pet box", "pet transporter", "pet carrier" should all be understood to refer to the same product, that is, a product with the ability to contain, secure and transport in various means, including aircraft, one or more pets therein.

Additionally, throughout this disclosure reference to the orientation or positional relationship between features are often accompanied by terms such as "upper", "lower", "front", "rear", "inner", "outer", etc. It should be appreciated that the orientation or positional relationship used between features will refer to an embodiment of the disclosure in use, and may only be for the convenience of describing the embodiment and simplifying the description, rather than indicating or implying that the feature of the embodiment is restricted to that specific orientation, position, construction, etc. and not be construed as a limitation of the present disclosure.

### SUMMARY

Embodiments of the present disclosure relate to a window structure for a pet transporter, wherein the window structure is particularly configured to be removable or replaceable with respect to one or more openings of the pet transporter, whereby the window structure facilitates airflow and light throughout the pet transporter. Additionally, the window structure is preferably formed by stamping a metal panel, thereby allowing for the ease of manufacture, modularity and installation of the window structure onto the pet transporter.

The invention is defined by the features of claim 1. Further preferred embodiments are depicted in the dependent claims.

According to a first aspect of the present disclosure, there is provided a window structure for a pet transporter; the window structure comprises a panel body comprising a plurality of through holes disposed proximal to a selected portion of the panel body, and a plurality of first attachment portions provided around the periphery of the panel body; wherein the plurality of first attachment portions are arranged and configured to concord with a plurality of second attachment portions provided around a periphery of an opening of a box body of the pet transporter; wherein the first attachment portions are provided on upper and lower sides of the panel body, and wherein the corresponding second attachment portions are positioned about the opening of the box body to concord with the positions of the first attachment portions; wherein the box body comprises a positioning protrusion positioned about the opening, and the panel body comprises a positioning hole and a stop piece disposed at an opposite right or left side to the positioning hole, wherein the positioning hole is sized and shaped to receive the positioning protrusion therein, the positioning hole co-operates with the positioning protrusion to effect releasable securement of the window structure to the pet transporter, and the stop piece is sized and shaped to be received through the opening and abut against an edge thereof, wherein co-operation of the stop piece and the positioning hole forms an anti-retraction mechanism to minimise lateral movement of the window structure when fixed to the pet transporter; and wherein, in use, each of the first and second attachment portions co-operate to form an attachment mechanism to effect releasable securement of the window structure to the pet transporter, and the plurality of through holes co-operate with the opening allow light and air to be transmitted in and out of the pet transporter.

In one embodiment, co-operation of the first and second attachment portions align the plurality of through holes of the window structure to the opening of the pet transporter.

In one embodiment, the opening is disposed on a side of a box body of the pet transporter.

In one embodiment, each of the first attachment portions comprise a hook portion extending inwardly from an inside of the panel body, the hook portion being sized and shaped so as to extend through a receiving hole of a corresponding second attachment portion and hook onto an inner wall of the box body.

In one embodiment, the hook portion of each first attachment portion is a 90-degree bent structure that is concave in its extension through the receiving hole of the corresponding second attachment portion.

In one embodiment, in use, co-operation of the first and second attachment portions to effect releasable securement of the window structure to the pet transporter provides a tactile and audible indication of securement.

In one embodiment, in use, imparting force in a first direction to co-operate the first and second attachment portions secures the window structure to the pet transporter.

In one embodiment, in use, imparting force in a second direction opposite to the first direction acts against the co-operation of the first and second attachment portions to release the window structure from the pet transporter.

In one embodiment, the panel body of the window structure is formed by stamping a metal plate.

In one embodiment, the window structure comprises a panel body formed by stamping a metal plate comprising a plurality of through holes disposed proximal to a selected portion of the panel body, and a plurality of hook portions extending inwardly from an inside of the panel body and provided around the periphery of the panel body; the pet transporter comprising a box body comprising an opening comprising a plurality of receiving holes provided around the periphery of the opening; and wherein, in use, each of the hook portions are sized and shaped to extend through a corresponding receiving hole to form an attachment mechanism to effect releasable securement of the window structure to the pet transporter, and align the plurality of through holes of the window structure with the opening of the box body to allow light and air to be transmitted in and out of the pet transporter.

### BRIEF DESCRIPTION OF DRAWINGS

Embodiments of the present disclosure will be discussed with reference to the accompanying drawings wherein:
Figure 1 is a perspective view of a pet transporter according to an embodiment;
Figure 2 is a perspective view of a window structure according to an embodiment, for use with the pet transporter of Figure 1;
Figure 3 is a perspective view illustrating the window structure of Figure 2 being installed to an opening of a box body of the pet transporter, wherein arrows illustrate the installation direction;
Figure 4 is a perspective view illustrating the window structure installed onto the opening of the box body to form a window assembly, wherein arrows illustrate the direction of assembly;
Figure 5 is a plan view of the window assembly of Figure 4;
Figure 6 is a view of detail A of Figure 3;
Figure 7 is a view of detail B of Figure 3;
Figure 8 is a view of detail C of Figure 4; and
Figure 9 is a view of detail D of Figure 4.

In the following description, like reference characters designate like or corresponding parts throughout the figures. It will be appreciated that the Figures illustrate the disclosure as preferred embodiments only, and those skilled in the art will appreciate that the Figures are only drawn for the purpose of accompanying the detailed description below. Furthermore, unless otherwise indicated, the Figures are merely schematic representations of the composition or construction of the disclosed embodiments and may contain exaggerated representations that are not necessarily drawn to scale.

It should be noted that in the following disclosure, like numerals refer to like items, such that once an item has been defined in any part of the disclosure, it may not be further defined and/or explained subsequently.

### DESCRIPTION OF EMBODIMENTS

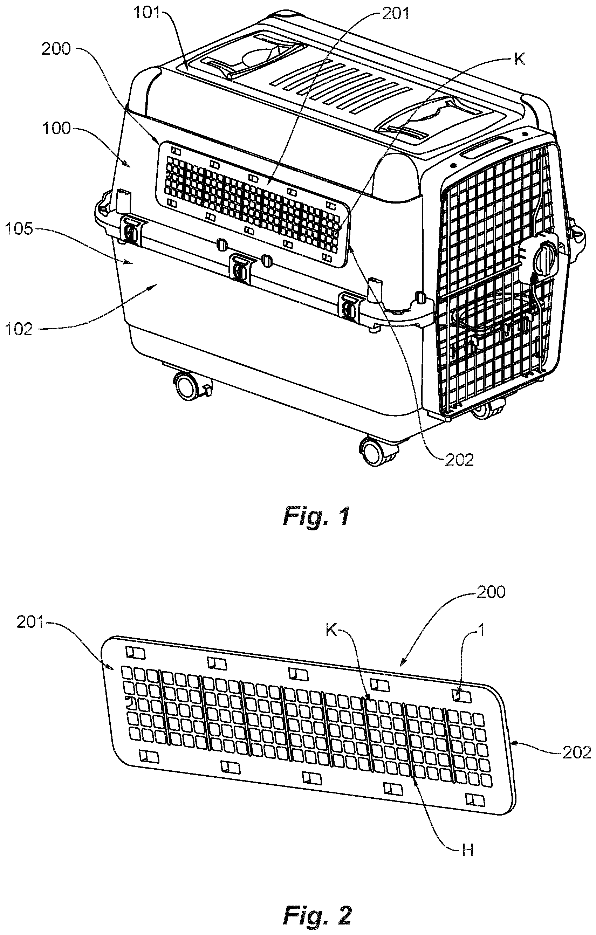

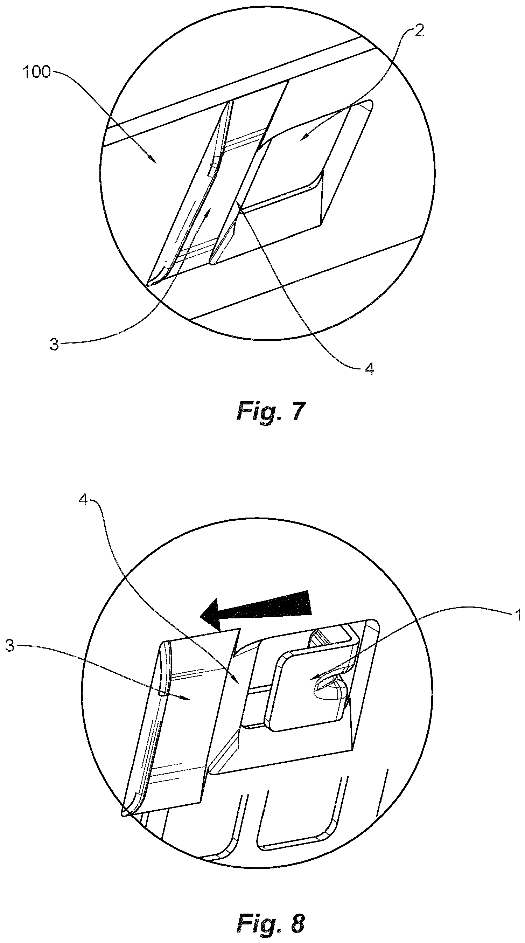

Referring to any one of Figures 1 to 9, there is illustrated a pet transporter 100, according to an embodiment, capable of accommodating pets to achieve the function of transporting and restraining pets.

Particularly, in one embodiment best illustrated by Figure 1, the present disclosure relates to a window structure 200 for a pet transporter 100. The window structure 200 comprises a panel body 201 comprising a plurality of through holes K disposed proximal to a selected portion of the panel body 201, and a plurality of first attachment portions 1 provided around the periphery of the panel body 201.

The pet transporter 100 comprising a box body 105 comprising an opening 110 that may be disposed on a top wall 101 or a side wall 102 of the box body 105. The box body 105 of the pet transporter 100 comprises an internal space sized and shaped to provide an area for accommodating pets, such that the pets may stand, sit and/or sleep. The opening 110 comprises a plurality of second attachment portions 2 provided around the periphery of the opening 110, whereby the first 1 and second 2 attachment portions are in co-alignment with each other (i.e. each of the first attachment portions 1 are arranged and configured to concord with a corresponding second attachment portion 2). In use, each of the first 1 and second 2 attachment portions co-operate to form an attachment mechanism to effect releasable securement of the window structure 200 to the pet transporter 100, and the plurality of through holes K co-operate with the opening 110 to allow light and air to be transmitted in and out of the pet transporter 100.

It will be appreciated that by securing the window structure 200 onto the pet transporter 100 creates a sense of security for the contained pet, enables the pet to observe the external environment to the pet transporter 100, allows for greater air circulation through the pet transporter 100, better light to be transmitted therein, and also allows for better observation of the condition of the contained pet in the transporter 100 through the secured window structure 200.

Referring now to any one of Figures 1 to 5, in one embodiment, the window structure 200 may be formed by stamping a metal plate. It should be noted that window structures of prior art or conventional pet transporters usually comprise a metal strip, and these metal strips are typically inserted at intervals of the prior art window structures onto the transporters, or they are welded sheets of metal strips that are permanently fixed onto an opening to form a window on a pet transporter. These prior art window structures have complex structures, that are difficult not only to construct, but also are difficult to paint and install onto pet transporters. Accordingly, costs of these prior art window structures are quite high. Additionally, some of these prior art window structures are manufactured of plastic, but the problem with being constructed of plastic is that it is weak and accordingly easily damaged by pets.

The disclosed window structure 200 being formed by stamping a metal plate simplifies the construction/fabrication process, ensures the strength of the window structure 200, and by being metal, it is less likely to be damaged by the pet being transported.

An additional advantage of the disclosed window structure 200, and its fabrication from a metal plate, is that when the window structure 200 is secured to the pet transporter 100, it may also act so as to provide a reinforcement/structural part to the pet transporter 100 as a whole. Thereby making the pet transporter 100 more durable.

It will be appreciated that the first 1 and second 2 attachment portions co-operate to form the attachment mechanism that advantageously effects releasable securement of the window structure 200 to the pet transporter 100. This allows the window structure 200 to be readily fixed to, and removed from, the pet transporter 100. In this way, as the window structure 200 is easily removable from the pet transporter 100, in case of an emergency situation wherein a usual door of the pet transporter 100 is not accessible, the window structure 200 may be utilised to remove the contained pet from the transporter 100.

It will also be appreciated that as the window structure 200 is easily removable, it is also convenient for an owner of the pet transporter 100 to clean the window structure 200 independently. Additionally, by removing the window structure 200, it may also make it easier to clean the interior of the box body 105 through the opening 110.

Referring to any one of Figures 1 to 3, in one embodiment a peripheral edge of the window structure 200 comprises a peripheral side portion 202 that is bent inward, such that the peripheral side portion 202 is pressed against an outer wall of the box body 105 of the pet transporter 100. In this way, the window structure 200 is designed as a structure composed of the panel body 201 and the peripheral side portion 202, which can enhance the rigidity of the window structure 200 itself under the premise of the same thickness of the panel body 201, and advantageously further strengthens the box body 105 of the pet transporter 100.

In an alternative embodiment, the surface of the panel body 201 may be smooth, and a junction at which the bent peripheral side portion 202 is, may be an arc shape (not illustrated). This alternative embodiment may be used in the instance that the pet transporter 100 is of a particular design (not illustrated) that may be more curved or angular. It will be appreciated that in this alternative embodiment, the arc shape of the peripheral side portion 202 may also be a safety feature that prevents the hands of a user of the pet transporter 100 from being scratched by otherwise sharp edges.

It will be appreciated that the metal plate from which the window structure 200 is formed, may be easily painted to provide the pet transporter with a distinctive and attractive appearance, but the applied paint may also play a role of rust prevention for the window structure 200.

In one embodiment, illustrated in any one of Figures 1 to 5, the plurality of through holes K are formed by punching out the holes K in the metal panel body 201 or by slotting. When the window structure 200 is installed onto the pet transporter 100, co-operation of the first 1 and second 2 attachment portions align the plurality of through holes K with the opening 110, such that the through holes K are capable of transmitting both light and air into the interior of the pet transporter 100. In this way, the first attachment portions 1 may be considered first positioning structures for both fixing the window structure 200 onto the box body 105 of the pet transporter 100, and positioning the window structure 200 onto the box body 105.

In one embodiment, in use, co-operation of the first 1 and second 2 attachment portions to effect releasable securement of the window structure 200 to the pet transporter 100 provides a tactile and audible indication of securement. That is, advantageously, a user is able to feel and hear that the window structure 200 has been secured to the pet transporter 100.

In one embodiment, illustrated in Figure 1, the opening 110 is disposed on a side wall 102 of the box body 105 of the pet transporter 100.

Referring now to Figures 1 and 2, the plurality of through holes K may be rectangular in shape and may be distributed in an array. In this embodiment, it is a middle area of the panel body 201 that comprises the through holes K, which may be divided into 9 units, wherein each unit has holes K in a 3x5 matrix, and a reinforcing portion H extends along a width direction of the panel body 201 that is arranged between each matrix unit. The reinforcing portion H may be a concave strip structure in the panel body 201. It will be appreciated that alternate matrix and arrangement of through holes K are envisaged beyond those illustrated in the Figures and discussed herein, and that the middle area where the holes K are formed can be arranged with a view to increase the strength of the panel body 201 via the reinforcing portion H.

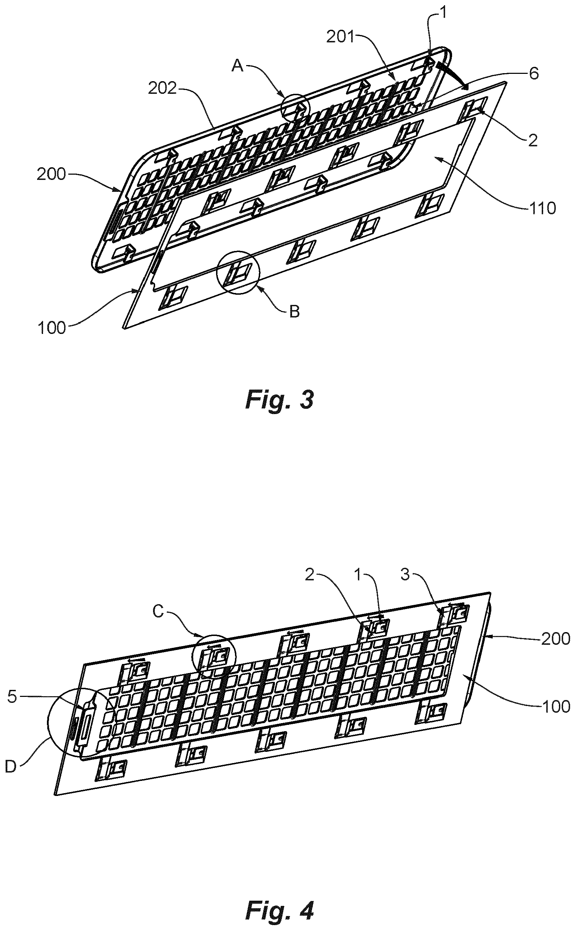

Referring now to Figure 3, there is shown an assembly diagram illustrating the assembly of the window structure 200 to the opening 110 of the box body 105, according to a preferred embodiment, wherein the illustrated arrow indicates the direction of the assembly.

Referring once more to Figures 1 and 2, the panel body 201 comprises a width direction extending up and down, and a length direction extending left and right. In this way, the longitudinal direction corresponds to the longitudinal direction of the pet transporter 100.

In one embodiment, referring to Figures 3 to 5 or 9, a positioning protrusion L is positioned about the opening 110 of the box body 105. In this embodiment, the periphery of panel body 201 may further comprise a positioning hole P that is sized and shaped to co-operate and receive the positioning protrusion L therein to further effect releasable securement of the window structure 200 to the pet transporter 100 and minimise lateral movement of the window structure 200 when secured to the pet transporter 100. Advantageously, the co-operative effect of positioning hole P and protrusion L is that it acts as a secondary securement feature of the window 200 to the transporter 100, and also in that it prevents the window 200 from falling off the transporter 100 in the event that the contained pet bites or scratches the fixed window 200.

In one embodiment, illustrated in any one of the Figures, the first attachment portions 1 are provided on upper and lower sides of the panel body 201. In this embodiment, the positioning hole P is positioned on a right or left side of the panel body 201, and wherein the corresponding second attachment portions 2 and the positioning protrusion L are positioned about the opening 110 of the box body 105 to concord with the positions of the first attachment portions 1 and the positioning hole P.

In one embodiment, referring now to Figure 3, each of the first attachment portions 1 comprise a hook portion extending inwardly from an inside of the panel body 201, each of the hook portions 1 being sized and shaped so as to extend through a receiving hole of a corresponding second attachment portion 2 and hook onto an inner wall of the box body 105.

Referring now to Figure 4, there is illustrated in one embodiment an assembled view of the window 200 to the box body 105 of the pet transporter 100, whereby the arrows illustrate the assembly direction.

In one embodiment, the hook portion 1 of each first attachment portion is a 90-degree bent structure that is concave in its extension through the receiving hole of the corresponding second attachment portion 2. Preferably, the bending direction of the hook portion 1 is consistent with the length direction of the window structure 200. In this preferred embodiment, the window structure 200 moves along the length direction so that the inner wall of the box body 105 enters the first hook portion 1 or separates from the hook portion 1, thereby realising the releasable securement mechanism of the window structure 200 to the pet transporter 100.

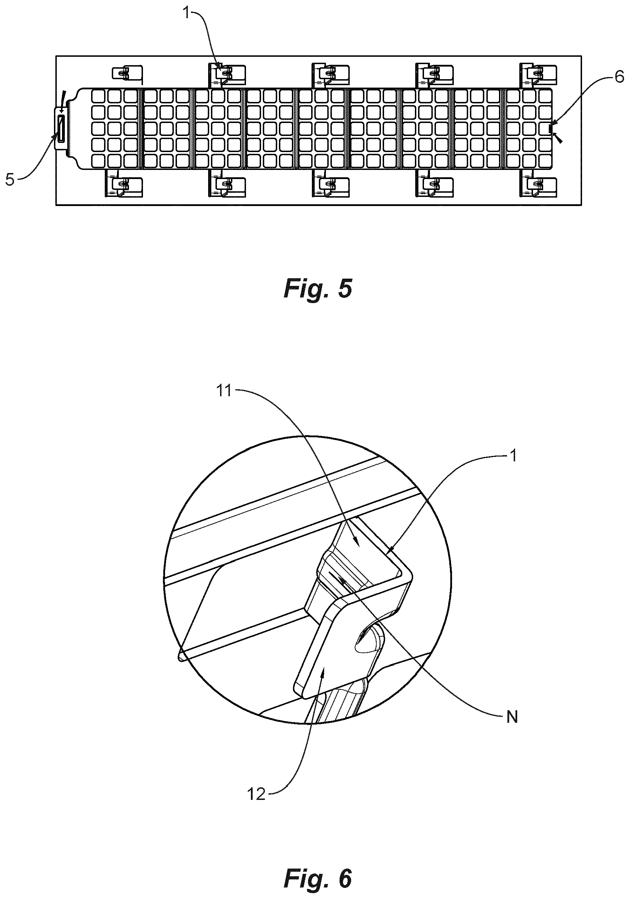

In the above embodiment, each of the first hook portions 1 may comprise a first vertical section 11 and a first bending section 12, this is best illustrated in Figure 6. The length of the first vertical section 11 may be adapted to the wall thickness of the box body 105. It will be appreciated that the first vertical section 11 and the first bending section 12 form the 90-degree bending structure of each hook portion 1.

Additionally, in the above embodiment, the first bending section 12 may be parallel to the inner wall of the box body 105, and the surface of the first bending section 12, in use, is close to the inner wall of the box body 105 such that it presses on the inner wall so as to snap the window structure 200 onto the pet transporter 100.

In one embodiment, the first hook portion 1 may be formed with a concave-convex structure to enhance its rigidity. In particular, with reference to Figure 6, the first hook portion 1 comprises a convex rib N that is convex toward the inner side of the first hook portion 1, and is positioned roughly in the middle of the first hook portion 1 and extending in its length direction.

In any one of the above embodiments, it will be appreciated that as the panel body 201 of the window structure 200 is formed from a metal plate, the first hook portion 1 of each first attachment portion may be formed by inward stamping of at least one of upper and lower sides of the panel body 201. In this way, the first hook portion 1 may comprise a raised positioning portion that is sized and shaped to abut against the inner wall of the box body 105 and effect securement of the window structure 200 onto the pet transporter 100.

In one embodiment, best illustrated in Figures 4, 7 and 8, a raised positioning portion 3 is provided at the position where an outer wall of the box body 105 co-operates with the first hook portion 1. The raised positioning portion 3 being particularly designed such that it thickens the outer wall of the box body 105 and assists in the securement of the first hook portion 1 when co-operating with the corresponding second attachment portion 2 to effect releasable securement. It will be appreciated that the raised positioning portion 3 also acts to prevent the box body 105 from being damaged and broken due to the stresses imparted during securement and release of the window structure 200 from the pet transporter 100.

In the above embodiment, the raised positioning portion 3 is a convex structure (as illustrated) and extends from the edge of the first through hole 2, and the transition between the convex raised positioning portion 3 and the first through hole 2 is an inclined surface 4 (or a convex arc surface) which assists the first hook portion 1 co-operable with said hole 2 when effecting releasable securement of the window structure 200 to the pet transporter 100.

Referring now to Figures 3 to 5 and 9, the panel body 201 further comprises a stop piece 6 disposed on an opposite right or left side of the panel body 201 to the positioning hole P. Wherein, in use, the positioning protrusion L and the stop piece 6 co-operate to form an anti-retraction mechanism to minimise lateral movement of the window structure 200 when fixed to the pet transporter 100. The present inventors have surprisingly found that lateral movements may be more significant than vertical movements. For example, when there is an animal (or a pet) inside the pet transporter 100, the animal is more likely to create a lateral force against the pet transporter 100 than vertical forces. Accordingly, the anti-retraction mechanism minimises lateral movements of the window structure 200 while allowing the window structure 200 to be removed from the pet transporter 100 in a vertical direction as there is no positioning protrusion and stop piece in a vertical direction. It will be appreciated that the co-operation of the positioning protrusion L and the stop piece 6 may be considered an anti-back off structure in use, as it advantageously acts as a secondary securement means to ensure that the window structure 200 is not removed due to activity of the contained pet. It will further be appreciated that the positioning protrusion L and the stop piece 6 co-operate as an anti-return structure, whereby the positioning protrusion L and the stop piece 6 are at either ends of the window structure 200.

In the above embodiment, the stop piece 6 passes through the opening 110 of the box body 105 to abut against an edge of the opening so as to limit the movement of the window 200 when secured to the pet transporter 100. In the Figures, the stop piece 6 is illustrated as being on the right edge of the window 200, accordingly, in this example, the stop piece 6 would limit the rightward movement of the window 200 when secured to the pet transporter 100.

In this embodiment, the positioning hole P may be located on the left edge of the window structure 200 (as illustrated) opposite to the stop piece 6 on the right edge. The positioning hole P may comprise a second hook portion 5, whereby the second hook portion 5 faces to the left (in this example) and passes through the opening 110 of the box body 105 and is hooked onto the inner wall of the box body 105, and a second vertical section 51 of the second hook portion 5 abuts against the left edge of the opening 110 to limit lateral movement of the window structure 200 when secured to the pet transporter 100.

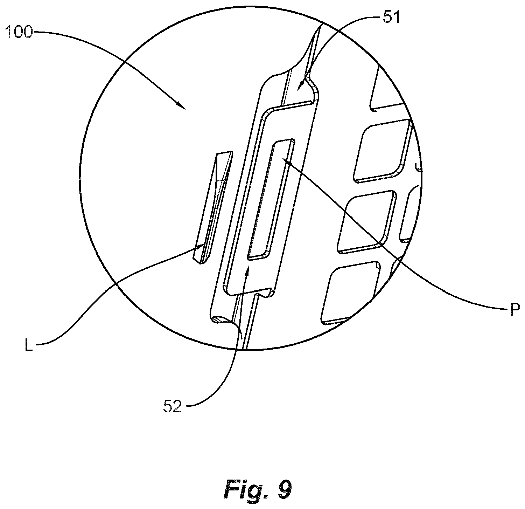

As illustrated in any one of the Figures, in the discussed embodiments, the direction of the first 1 and second 5 hook portions are directed to the left. Referring to Figure 9 in particular, the positioning hole P further comprises a second bending section 52 on which is disposed the positioning hole that co-operates with the positioning protrusion L.

In any one of the above embodiments, in order to secure the window structure 200 to the pet transporter 100, each of the first attachment portions 1 (first hook portions) of the window structure 200 are passed through the corresponding second attachment portions 2 (first through holes) of the opening 110, and the positioning hole P (second hook portion) is passed through the opening 110. Subsequently, the window structure 200 is moved to the left, and front ends of the first attachment portions 1 and the positioning hole P are hooked onto their respective second attachment portions 2 and positioning protrusion L. On the inner wall of the box body 105, the second vertical section 51 of the second hook portion 5 abuts against the left edge of the opening 110 to limit the leftward movement of the window structure 200, and at this time, the right stop piece 6 is stuck on the right edge of the opening 110 (i.e. as the stop piece 6 is oppositely located to the second hook portion 5), and the positioning protrusion L co-operates with the positioning hole P to secure the window structure 200 to the pet transporter 100. In this way, it is demonstrated that the second hook portion 5 and the stop piece 6 together co-operate to play a role of preventing withdrawal of the window structure 200 from the pet transporter 100 opening 110.

When the window structure 200 is to be disassembled (or released) from the pet transporter 100, a force from inside of the box body 105 to the outside needs to be applied to the window structure 200, such that the positioning protrusion L exits the positioning hole P, and the stop piece 6 is separated from the right edge of the opening 110. At this time, the window structure 200 can be moved to the right (i.e. opposite in direction above), so that the first attachment portions 1 can be separated from the inner wall of the box body 105 and can be withdrawn from their corresponding second attachment portions 2, thereby releasing the window structure 200 from the pet transporter 100.

In a broad sense, in use, imparting a force in a first direction (e.g. to the left in the above embodiment) to co-operate the first 1 and second 2 attachment portions secures the window structure 200 to the pet transporter. Accordingly, imparting a force in a second direction opposite to the first direction (e.g. to the right in the above embodiment) acts against the co-operation of the first 1 and second 2 attachment portions to release the window structure 200 from the pet transporter 100.

It will be appreciated that when compared with the prior art, the presently disclosed window structure 200 for the pet transporter 100 has a number of advantages. In particular, the window structure 200 is formed by stamping a metal plate which not only simplifies the production and assembly process of the window structure 200, but also ensures the strength of the window of the pet transporter 100, avoids the window being damaged by contained pets, and when installed, the window structure 200 acts to provide strength and rigidity to the box body 105 of the pet transporter. Furthermore, being easily and readily removable, the window structure 200 disclosed herein is easily able to be independently cleaned and replaced if required without the need for a user to purchase an entirely new pet transporter.

Those skilled in the art will appreciate that these descriptions are only descriptive, exemplary, and should not be construed as limiting the scope of protection of the present invention.

The reference to any prior art in this specification is not, and should not be taken as, an acknowledgement or any form of suggestion that such prior art forms part of the common general knowledge.

It will be understood that the terms "comprise" and "include" and any of their derivatives (e.g. comprises, comprising, includes, including) as used in this specification, and the claims that follow, is to be taken to be inclusive of features to which the term refers, and is not meant to exclude the presence of any additional features unless otherwise stated or implied.

In some cases, a single embodiment may, for succinctness and/or to assist in understanding the scope of the disclosure, combine multiple features. It is to be understood that in such a case, these multiple features may be provided separately (in separate embodiments), or in any other suitable combination. Alternatively, where separate features are described in separate embodiments, these separate features may be combined into a single embodiment unless otherwise stated or implied. This also applies to the claims which can be recombined in any combination. That is a claim may be amended to include a feature defined in any other claim. Further a phrase referring to "at least one of" a list of items refers to any combination of those items, including single members. As an example, "at least one of: a, b, or c" is intended to cover: a, b, c, a-b, a-c, b-c, and a-b-c.

It will be appreciated by those skilled in the art that the disclosure is not restricted in its use to the particular application or applications described. Neither is the present disclosure restricted in its preferred embodiment with regard to the particular elements and/or features described or depicted herein. It will be appreciated that the disclosure is not limited to the embodiment or embodiments disclosed, but is capable of numerous rearrangements, modifications and substitutions within the scope of the invention as set forth and defined by the following claims.

## Claims

1. A pet transporter (100) comprising a window structure (200);
the window structure (200) comprising a panel body (201) comprising a plurality of through holes (K) disposed proximal to a selected portion of the panel body (201), and a plurality of first attachment portions (1) provided around the periphery of the panel body (201);
wherein the plurality of first attachment portions (1) are arranged and configured to concord with a plurality of second attachment portions (2) provided around a periphery of an opening (110) of a box body (105) of the pet transporter (100), wherein the first attachment portions (1) are provided on upper and lower sides of the panel body (201), and wherein the corresponding second attachment portions (2) are positioned about the opening (110) of the box body (105) to concord with the positions of the first attachment portions (1); wherein the panel body (201) comprises a stop piece (6) disposed at a right or left side of the panel body (201), wherein the stop piece (6) is sized and shaped to be received through the opening (110) and abut against an edge thereof; the pet transporter (100) **characterised in that:**
the box body (105) comprises a positioning protrusion (L) positioned about the opening (110), and the panel body (201) comprises a positioning hole (P) disposed at an opposite right or left side to the stop piece (6), wherein the positioning hole (P) is sized and shaped to receive the positioning protrusion (L) therein, and
the positioning hole (P) co-operates with the positioning protrusion (L) to effect releasable securement of the window structure (200) to the pet transporter (100), wherein co-operation of the stop piece (6) and the positioning hole (P) forms an anti-retraction mechanism to minimise lateral movement of the window structure (200) when fixed to the pet transporter (100); and
wherein, in use, each of the first (1) and second (2) attachment portions co-operate to form an attachment mechanism to effect releasable securement of the window structure (200) to the pet transporter (100), and the plurality of through holes (K) co-operate with the opening (110) allow light and air to be transmitted in and out of the pet transporter (100).

2. The pet transporter (100) of claim 1, wherein the attachment mechanism ensures alignment of the plurality of through holes (K) of the window structure (200) to the opening (110) of the pet transporter (100).

3. The pet transporter (100) of any one of claims 1 or 2, wherein the opening (110) is disposed on a side of the box body (105) of the pet transporter (100).

4. The pet transporter (100) of any one of the preceding claims, wherein each of the first attachment portions (1) comprise a hook portion extending inwardly from an inside of the panel body (201), the hook portion being sized and shaped so as to extend through a receiving hole of a corresponding second attachment portion (2) and hook onto an inner wall of the box body (105).

5. The pet transporter (100) of claim 4,
wherein the hook portion of each first attachment portion (1) is a 90-degree bent structure that is concave in its extension through the receiving hole of the corresponding second attachment portion (2).

6. The pet transporter (100) of any one of the preceding claims, wherein the first (1) and second (2) attachment portions are configured to co-operate, in use, effect releasable securement of the window structure (200) to the pet transporter (100) provides a tactile and audible indication of securement of the window structure (200) to the pet transporter (100).

7. The pet transporter (100) of any one of the preceding claims, wherein the first (1) and second (2) attachment portions are configured to, in use, in response to a force imparted in a first direction, effect releasable securement of the window structure (200) to the pet transporter (100).

8. The pet transporter (100) of claim 7,
wherein the first (1) and second (2) attachment portions are configured to, in use, in response to a force imparted in a second direction opposite to the first direction, acts against a co-operation of the first (1) and second (2) attachment portions to effect release of the window structure (200) from the pet transporter (100).

9. The pet transporter (100) of claim 1, wherein the panel body (201) of the window structure (200) is formed by stamping a metal plate.

10. The pet transporter (100) of claim 1,
wherein the panel body (201) of the window structure (200) is formed by stamping a metal plate;
wherein the panel body (201) comprises a plurality of hook portions extending inwardly from an inside of the panel body (201) and provided around the periphery of the panel body (201);
wherein the opening (110) of the box body (105) comprises a plurality of receiving holes provided around the periphery of the opening (110);
and wherein, in use, each of the hook portions are sized and shaped to extend through a corresponding receiving hole to form an attachment mechanism to effect releasable securement of the window structure (200) to the pet transporter (100).

## Patentansprüche

1. Ein Tiertransporter (100), der eine Fensterstruktur (200) umfasst;
wobei die Fensterstruktur (200) einen Panelkörper (201) umfasst, der eine Mehrzahl von Durchgangslöchern (K) umfasst, die in der Nähe eines ausgewählten Abschnitts des Panelkörpers (201) angeordnet sind, und eine Mehrzahl von ersten Befestigungsabschnitten (1), die um den Umfang des Panelkörpers (201) herum vorgesehen sind;
wobei die mehreren ersten Befestigungsabschnitte (1) so angeordnet und konfiguriert sind, dass sie mit mehreren zweiten Befestigungsabschnitten (2) übereinstimmen, die um einen Umfang einer Öffnung (110) eines Kastenkörpers (105) des Tiertransporters (100) herum vorgesehen sind, wobei die ersten Befestigungsabschnitte (1) an einer oberen und einer unteren Seite des Panelkörpers (201) vorgesehen sind, und wobei die entsprechenden zweiten Befestigungsabschnitte (2) bogenförmig um die Öffnung (110) des Kastenkörpers (105) herum positioniert sind, um mit den Positionen der ersten Befestigungsabschnitte (1) übereinzustimmen; wobei der Panelkörper (201) ein Anschlagstück (6) umfasst, das an einer rechten oder linken Seite des Panelkörpers (201) angeordnet ist, wobei das Anschlagstück (6) so dimensioniert und geformt ist, dass es durch die Öffnung (110) aufgenommen wird und an einer Kante davon anliegt; der Tiertransporter (100) **dadurch gekennzeichnet, dass**:
der Kastenkörper (105) einen Positionierungsvorsprung (L) aufweist, der um die Öffnung (110) herum angeordnet ist, und der Panelkörper (201) ein Positionierungsloch (P) aufweist, das an einer dem Anschlagstück (6) gegenüberliegenden rechten oder linken Seite angeordnet ist,
wobei das Positionierungsloch (P) so dimensioniert und geformt ist, dass es den Positionierungsvorsprung (L) darin aufnimmt,
das Positionierungsloch (P) mit dem Positionierungsvorsprung (L) zusammenwirkt, um eine lösbare Befestigung der Fensterstruktur (200) an dem Haustiertransporter (100) zu bewirken, wobei das Zusammenwirken des Anschlagstücks (6) und des Positionierungslochs (P) einen Anti-Rückzugsmechanismus bildet, um eine seitliche Bewegung der Fensterstruktur (200) zu minimieren, wenn sie an dem Haustiertransporter (100) befestigt ist; und
wobei im Gebrauch sowohl der erste (1) als auch der zweite (2) Befestigungsabschnitt zusammenwirken, um einen Befestigungsmechanismus zu bilden, um eine lösbare Befestigung der Fensterstruktur (200) an dem Tiertransporter (100) zu bewirken, und die Mehrzahl von Durchgangslöchern (K) mit der Öffnung (110) zusammenwirken, um zu ermöglichen, dass Licht und Luft in den und aus dem Tiertransporter (100) übertragen werden.

2. Tiertransporter (100) nach Anspruch 1, wobei der Befestigungsmechanismus die Ausrichtung der Vielzahl von Durchgangslöchern (K) der Fensterstruktur (200) auf die Öffnung (110) des Tiertransporters (100) gewährleistet.

3. Tiertransporter (100) nach einem der Ansprüche 1 oder 2, wobei die Öffnung (110) an einer Seite des Kastenkörpers (105) des Tiertransporters (100) angeordnet ist.

4. Tiertransporter (100) nach einem der vorhergehenden Ansprüche, wobei jeder der ersten Befestigungsabschnitte (1) einen Hakenabschnitt umfasst, der sich von einer Innenseite des Panelkörpers (201) nach innen erstreckt, wobei der Hakenabschnitt so dimensioniert und geformt ist, dass er sich durch ein Aufnahmeloch eines entsprechenden zweiten Befestigungsabschnitts (2) erstreckt und an einer Innenwand des Kastenkörpers (105) einhakt.

5. Tiertransporter (100) nach Anspruch 4, wobei der Hakenabschnitt jedes ersten Befestigungsabschnitts (1) eine um 90 Grad gebogene Struktur ist, die in ihrer Verlängerung durch das Aufnahmeloch des entsprechenden zweiten Befestigungsabschnitts (2) konkav ist.

6. Tiertransporter (100) nach einem der vorhergehenden Ansprüche, wobei der erste (1) und der zweite (2) Befestigungsabschnitt so konfiguriert sind, dass sie bei der Verwendung eine lösbare Befestigung der Fensterstruktur (200) an dem Tiertransporter (100) bewirken und eine fühlbare und hörbare Anzeige der Befestigung der Fensterstruktur (200) an dem Tiertransporter (100) liefern.

7. Tiertransporter (100) nach einem der vorhergehenden Ansprüche, wobei die ersten (1) und zweiten (2) Befestigungsabschnitte so konfiguriert sind, dass sie im Gebrauch als Folge einer in einer ersten Richtung ausgeübten Kraft eine lösbare Befestigung der Fensterstruktur (200) an dem Tiertransporter (100) bewirken.

8. Tiertransporter (100) nach Anspruch 7, wobei der erste (1) und der zweite (2) Befestigungsabschnitt so konfiguriert sind, dass sie im Gebrauch als Reaktion auf eine Kraft, die in einer zweiten Richtung entgegengesetzt zur ersten Richtung ausgeübt wird, gegen ein Zusammenwirken des ersten (1) und des zweiten (2) Befestigungsabschnitts wirken, um ein Lösen der Fensterstruktur (200) von dem Tiertransporter (100) zu bewirken.

9. Tiertransporter (100) nach Anspruch 1, wobei der Panelkörper (201) der Fensterstruktur (200) durch Stanzen einer Metallplatte gebildet wird.

10. Tiertransporter (100) nach Anspruch 1, wobei der Panelkörper (201) der Fensterstruktur (200) durch Stanzen einer Metallplatte geformt wird;
wobei der Panelkörper (201) eine Vielzahl von Hakenabschnitten aufweist, die sich von einer Innenseite des Panelkörpers (201) nach innen erstrecken und um den Umfang des Panelkörpers (201) herum vorgesehen sind;
wobei die Öffnung (110) des Kastenkörpers (103) eine Vielzahl von Aufnahmelöchern aufweist, die um den Umfang der Öffnung (110) herum vorgesehen sind;
und wobei bei der Verwendung jeder der Hakenabschnitte so dimensioniert und geformt ist, dass er sich durch ein entsprechendes Aufnahmeloch erstreckt, um einen Befestigungsmechanismus zu bilden, der eine lösbare Befestigung der Fensterstruktur (200) an dem Tiertransporter (100) bewirkt.

## Revendications

1. Caisse de transport pour animaux de compagnie (100) comprenant une structure de fenêtre (200) ;
la structure de fenêtre (200) comprenant un corps de panneau (201) comprenant une pluralité de trous traversants (K) disposés à proximité d'une partie sélectionnée du corps de panneau (201), et une pluralité de premières parties d'attache (1) prévues autour de la périphérie du corps de panneau (201) ;
dans laquelle la pluralité de premières parties d'attache (1) sont arrangées et configurées pour concorder avec une pluralité de secondes parties d'attache (2) fournies autour d'une périphérie d'une ouverture (110) d'un corps de boîte (105) de la caisse de transport d'animaux de compagnie (100), dans laquelle les premières parties d'attache (1) sont fournies sur les côtés supérieur et inférieur du corps de panneau (201), et dans laquelle les secondes parties d'attache correspondantes (2) sont positionnées autour de l'ouverture (110) du corps de boîte (105) pour concorder avec les positions des premières parties d'attache (1) ; dans laquelle le corps de panneau (201) comprend une pièce d'arrêt (6) disposée sur un côté droit ou gauche du corps de panneau (201), dans laquelle la pièce d'arrêt (6) est dimensionnée et façonnée pour être reçue à travers l'ouverture (110) et buter contre un bord de celle-ci ; la caisse de transport d'animaux de compagnie (100) étant **caractérisée en ce que :**
le corps de boîte (105) comprend une protubérance de positionnement (L) positionnée autour de l'ouverture (110), et le corps de panneau (201) comprend un trou de positionnement (P) disposé sur un côté droit ou gauche opposé à la pièce d'arrêt (6), dans laquelle le trou de positionnement (P) est dimensionné et façonné pour recevoir la protubérance de positionnement (L) à l'intérieur de celui-ci, et
le trou de positionnement (P) coopère avec la protubérance de positionnement (L) pour fixer de manière libérable la structure de fenêtre (200) à la caisse de transport d'animaux de compagnie (100), dans laquelle la coopération de la pièce d'arrêt (6) et du trou de positionnement (P) forme un mécanisme anti-rétraction pour minimiser le mouvement latéral de la structure de fenêtre (200) lorsqu'elle est fixée à la caisse de transport d'animaux de compagnie (100) ; et
dans laquelle, lors de l'utilisation, chacune des premières (1) et secondes (2) parties d'attache coopèrent pour former un mécanisme d'attache permettant de fixer de manière libérable la structure de fenêtre (200) à la caisse de transport d'animaux de compagnie (100), et la pluralité de trous traversants (K) coopèrent avec l'ouverture (110) pour permettre à la lumière et à l'air d'entrer et de sortir de la caisse de transport d'animaux de compagnie (100).

2. Caisse de transport d'animaux de compagnie (100) de la revendication 1, dans laquelle le mécanisme d'attache assure l'alignement de la pluralité de trous traversants (K) de la structure de fenêtre (200) sur l'ouverture (110) de la caisse de transport d'animaux de compagnie (100).

3. Caisse de transport d'animaux de compagnie (100) de l'une des revendications 1 ou 2, dans laquelle l'ouverture (110) est disposée sur un côté du corps de boîte (105) de la caisse de transport d'animaux de compagnie (100).

4. Caisse de transport d'animaux de compagnie (100) de l'une quelconque des revendications précédentes, dans laquelle chacune des premières parties d'attache (1) comprend une partie de crochet s'étendant vers l'intérieur du corps de panneau (201), la partie de crochet étant dimensionnée et façonnée de manière à s'étendre à travers un trou de réception d'une deuxième partie d'attache correspondante (2) et à s'accrocher à une paroi intérieure du corps de boîte (105).

5. Caisse de transport d'animaux de compagnie (100) de la revendication 4, dans laquelle la partie de crochet de chaque première partie d'attache (1) est une structure courbée à 90 degrés qui est concave dans son extension à travers le trou de réception de la deuxième partie d'attache correspondante (2).

6. Caisse de transport d'animaux de compagnie (100) de l'une quelconque des revendications précédentes, dans laquelle les premières (1) et secondes (2) parties d'attache sont configurées pour coopérer, lors de l'utilisation, la fixation libérable de la structure de fenêtre (200) à la caisse de transport d'animaux de compagnie (100) fournit une indication tactile et sonore de la fixation de la structure de fenêtre (200) à la caisse de transport d'animaux de compagnie (100).

7. Caisse de transport d'animaux de compagnie (100) de l'une quelconque des revendications précédentes, dans laquelle les premières (1) et secondes (2) parties d'attache sont configurées pour, lors de l'utilisation, en réponse à une force exercée dans une première direction, réaliser une fixation libérable de la structure de fenêtre (200) à la caisse de transport d'animaux de compagnie (100).

8. Caisse de transport d'animaux de compagnie (100) de la revendication 7, dans laquelle les premières (1) et secondes (2) parties d'attache sont configurées pour, lors de l'utilisation, en réponse à une force exercée dans une deuxième direction opposée à la première direction, agir contre la coopération des premières (1) et secondes (2) parties d'attache pour libérer la structure de fenêtre (200) de la caisse de transport d'animaux de compagnie (100).

9. Caisse de transport d'animaux de compagnie (100) de la revendication 1, dans laquelle le corps de panneau (201) de la structure de fenêtre (200) est formé par moulage d'une plaque métallique.

10. Caisse de transport d'animaux de compagnie (100) de la revendication 1,
dans laquelle le corps de panneau (201) de la structure de fenêtre (200) est formé par moulage d'une plaque métallique ;
dans laquelle le corps de panneau (201) comprend une pluralité de parties de crochet s'étendant vers l'intérieur du corps de panneau (201) et prévues autour de la périphérie du corps de panneau (201) ;
dans laquelle l'ouverture (110) du corps de boîte (105) comprend une pluralité de trous de réception prévus autour de la périphérie de l'ouverture (110) ;
et dans laquelle, lors de l'utilisation, chacune des parties de crochet est dimensionnée et façonnée pour s'étendre à travers un trou de réception correspondant afin de former un mécanisme d'attache permettant de fixer de manière libérable la structure de fenêtre (200) à la caisse de transport d'animaux de compagnie (100) .
